# EUROPÄISCHE PATENTSCHRIFT

(11) **EP 2 112 009 B1**
(45) Veröffentlichungstag und Bekanntmachung des Hinweises auf die Patenterteilung: **22.06.2011**
(21) Anmeldenummer: 08155064.2
(22) Anmeldetag: 24.04.2008
(51) Int. Cl.: B60G 17/052

(54) **Verfahren zur Überprüfung eines Umgebungsventils in einer geschlossenen Niveauregelungsanlage eines Fahrzeuges**
Method of checking an environmental valve in a closed level control system in a vehicle
Procédé de vérification d'une soupape d'environnement dans une installation de réglage de niveau fermée d'un véhicule

(43) Veröffentlichungstag der Anmeldung: 28.10.2009
(73) Patentinhaber: Continental Teves AG & Co. oHG, 60488 Frankfurt (DE)
(72) Erfinder: Nettelmann, Marc, 31061 Alfeld (DE); Schaumburg, Harald, 31157 Sarstedt (DE); Vusmuc, Ramon, 550147 Sibiu (RO)

(56) Entgegenhaltungen:
- EP-A- 1 342 596
- EP-A- 1 442 903
- WO-A-2005/025901
- DE-A1- 10 126 458
- US-A- 4 870 390

## Beschreibung

Die Erfindung betrifft ein Verfahren zur Überprüfung eines Umgebungsventils einer geschlossenen Niveauregulierungsanlage. Die Niveauregulierungsanlage weist dabei einen Kompressor auf, Luftfedern für jedes Rad mindestens einer Achse, eine Hauptleitung zur Befüllung und Entlüftung aller Luftfedern, je ein schaltbares Luftfederventil zum Anschluss jeder Luftfeder an die Hauptleitung, einen Drucksensor in der Hauptleitung, einem Druckluftspeicher als Druckluftvorratsbehälter sowie einen Magnetventilblock mit einer Reihe von einzeln oder auch gemeinsam schaltbaren Magnetventilen für die Verschaltung der einzelnen Einrichtungen der Niveauregulierungsanlage. Der Druckluftspeicher, der Kompressor und die Luftfedern stehen über den Magnetventilblock derart in Verbindung, dass Druckluft sowohl aus dem Druckluftspeicher über den Kompressor und die Hauptleitung in die Luftfedern als auch aus den Luftfedern über die Hauptleitung und den Kompressor in den Druckluftspeicher überführbar, als auch der Druckluftspeicher durch dem Kompressor befüllbar ist. Weiterhin weist die Niveauregulierungsanlage ein in der Hauptleitung der Niveauregulierungsanlage angeschlossenes schaltbares Umgebungsventil zur Entlüftung der Druckluft aus der Niveauregulierungsanlage in die Umgebung auf.

Geschlossene Niveauregelanlagen dieser Art sind aus dem Stand der Technik, z.B. aus der gattungsbildenden DE 100 55 108 A1, seit langem bekannt.

Bei einer geschlossenen Niveauregulierungsanlage, auch GLV-Anlage oder GLV-System genannt, wird im Gegensatz zu einer offenen Niveauregulierungsanlage die in den Luftfedern nicht mehr benötigte Druckluft nicht über ein so genanntes "Umgebungsventil" in die Umgebungsluft abgelassen, wenn der Fahrzeugaufbau abgesenkt werden soll, sondern mit Hilfe des Kompressors aus den Luftfedern wieder in den Druckluftspeicher überführt. Ebenso wird in die einer geschlossenen Niveauregelanlage mit Hilfe des Kompressors Druckluft von dem Druckluftspeicher in die Luftfedern überführt, wenn der Aufbau des Fahrzeuges angehoben werden soll. Natürlich kann über einen entsprechend ausgebildeten Ventilblock Luft auch ohne Kompressorhilfe zwischen den Luftfedern und Druckluftspeicher direkt ausgetauscht werden, wenn der Fahrzeugaufbau abgesenkt oder angehoben werden soll.

Sowohl in dem Druckluftspeicher als auch in den Luftfedern liegt damit stets ein hoher Luftdruck, d.h. ein wesentlich höheres Druckluftniveau als in der Umgebung vor. Hierdurch wird der Vorteil erreicht, dass mit Hilfe des Kompressors schnell Druckluft auf hohem Druckniveau zwischen dem Druckluftspeicher und den Luftfedern hin- und hergepumpt und der Aufbau des Fahrzeuges somit schnell angehoben oder abgesenkt werden kann. Neben kurzen Ansprechzeiten zeigen geschlossene Luftfedersysteme zudem einen hohen Wirkungsgrad bei einem relativ geringen Energiebedarf. Evtl. entstehende Leckagen oder Druckverluste werden ersetzt, indem durch entsprechende Ventilschaltungen der Kompressor den Druckluftspeicher befüllt.

Auch eine geschlossene Niveauregulierungsanlage besitzt aber noch das sogenannte "Umgebungsventil", mit dem in besonderen Fällen, in der Regel in Notfällen oder bei einer zu starken Druckerhöhung im System etwa durch Temperatureinfluss, die Druckluft aus den Luftfedern direkt in die umgebende Atmosphäre abgelassen werden kann.

Das Umgebungsventil ist typischerweise an der Stammleitung oder Hauptleitung der Niveauregulierungsanlage angeschlossen, an der auch alle Luftfedern parallel angeschlossen sind und über welche die Luftfedern befüllt oder entlüftet werden. Jede Luftfeder ist über ein schaltbares Ventil an die Stammleitung angeschlossen. In der Stammleitung sitzt auch der Haupt-Drucksensor.

Die Stammleitung, der Kompressor, der Druckluftspeicher, sowie einige weitere Umgehungs- und Ansaugleitungen für das Auffüllen des Systems aus der Umgebung sind üblicherweise über einem Magnetventilblock mit einer Reihe von einzeln oder auch gemeinsam schaltbaren Magnetventilen je nach Steuerungsbefehl mit einander verbindbar bzw. verschaltbar. Zu diesen verschaltbaren Einheiten gehören natürlich auch weitere notwendige Einrichtungen wie Trockner, Drossel-Rückschlag-Einrichtungen, Umgehungsleitungen etc., wie sie zum sicheren Betreib einer solchen geschlossenen Niveauregulierungsanlage erforderlich sind.

Da nun bei einer geschlossenen Niveauregulierungsanlage das Umgebungsventil nicht mehr zum permanenten Ablassen von Druckluft aus den Luftfedern in die Umgebung benötigt wird, sondern nur noch, wie oben dargestellt, in selten auftretenden besonderen Fällen, bleibt ein Funktionsausfall des Umgebungsventils, etwa durch Verklemmen oder durch einen im Laufe der Zeit ausgefallenen elektrischen Anschluss, in der Regel lange unentdeckt. Das Umgebungsventil in einer geschlossenen Niveauregulierungsanlage muss aber immer funktionsfähig bleiben, und sei es beispielsweise nur darum, dass bei einem durch einen Ausfall der Stromzufuhr für die Steuerung der Luftfederungsanlage letztere entlüftet werden muss um in einen sicheren "harten" Fahrwerksmodus gefahren zu werden.

Für die Erfindung bestand daher die Aufgabe, ein Verfahren anzugeben, mit dem auf einfache Weise die Funktionsfähigkeit des Umgebungsventils überprüft werden kann.

Gelöst wird diese Aufgabe durch die Merkmale des Hauptanspruchs. Weitere vorteilhafte Ausbildungen sind in den Unteransprüchen offenbart.

Bei dem erfindungsgemäßen Verfahren werden zunächst bei geschlossenen Luftfederventilen die Magnetventile des Magnetventilblocks so geschaltet, dass die Hauptleitung mit dem Druck des Druckluftspeichers beaufschlagt wird. Danach wird mit Hilfe des Drucksensors ein Druck P₁ in der Hauptleitung gemessen. Dann werden die Magnetventile des Magnetventilblocks geschlossen. Anschließend wird das Umgebungsventil mit einem Schaltbefehl zur Öffnung/Entlüftung geöffnet und danach durch einen weiteren Schaltbefehl wieder geschlossen. Danach wird mit Hilfe des Drucksensors ein Druck P₂ in der Hauptleitung gemessen und schließlich die Druckwerte P₁ und P₂ miteinander verglichen.

Stellt man dabei fest, dass P₂ deutlich kleiner als P₁ ist, so ist davon auszugehen, dass das Umgebungsventil funktionsfähig ist. Ist dies nicht der Fall und P₂ gleich oder nicht deutlich kleiner als P₁, muss bei nächster Gelegenheit das Umgebungsventil einer detaillierten Überprüfung unterzogen werden, also ausgebaut und auf evtl. mechanische oder elektrische Schäden untersucht werden. Das erfindungsgemäße Verfahren anhand eines Druckvergleichs ist als erster Hinweise auf die Funktionsfähigkeit des Umgebungsventils außerordentlich einfach und sowohl bei einem Werkstattbesuch durchzuführen als auch als regelmäßige Routineuntersuchung im Fahrzeug, etwa bei jedem Start des Fahrzeuges. Sollte beispielsweise bei einer solchen Routineuntersuchung eine Fehlfunktion des Umgebungsventils erkannt werden, kann eine Warnleuchte im Fahrzeug auf den erforderlichen Besuch einer Werkstatt aufmerksam machen.

Die Prüfung des mechanischen Schaltens des Umgebungsventils basiert also auf einem Vorher-Nachher-Vergleich von Drücken, die der im GLV-System vorhandene Drucksensor liefert. Pneumatisch wird dabei die Stammleitung oder Hauptleitung (Luftleitung vom Magnetventilblock bis zum Drucksensor) mit dem Speicherdruck vorbefüllt. Anschließend wird die Hauptleitung entlüftet und abschließend der Druck in der Hauptleitung gemessen.

Eine vorteilhafte Weiterbildung besteht darin, dass die Differenz der Druckwerte P₁ und P₂ vor dem Vergleich der Druckwerte mit Hilfe eines Schwellenwertes klassifiziert wird. Damit vermeidet man, durch die Bauart des Sensors oder durch Auswertungsroutinen bedingte Messschwankungen oder Messungenauigkeiten des Sensors das Entscheidungskriterium P₁ < P₂ zu stark beeinflusst wird und zu schlecht interpretierbaren Aussagen führt.

Eine weitere vorteilhafte Weiterbildung besteht darin, dass der Druckwert P₁ vor dem Öffnen des Umgebungsventils mit Hilfe eines Schwellenwertes klassifiziert wird. Auch diese Maßnahme berücksichtigt die Messgenauigkeiten des Sensors insoweit, als ein genügend hoher Anfangsdruck vorliegen muss, um zu brauchbaren Messergebnissen zu gelangen.

Eine weitere vorteilhafte Weiterbildung besteht darin, dass zwischen dem Schließen des Umgebungsventils und der Messung des Drucks P₂ ein Zeitraum Δt liegt. Da das erfindungsgemäße Verfahren auf dem Vergleich statischer Drücke P₁ und P₂ beruht, berücksichtigt diese Maßnahme die Dynamik, d.h. die kurzzeitigen Druckschwankungen oder Druckstöße im Niveauregelungssystem dadurch, dass die Messung des Drucks P₂ erst nach dem Abklingen von dynamischen Druckveränderungen erfolgt, so dass keine fehlerhaften Messergebnisse erzeugt werden.

Es hat sich dabei als vorteilhaft erwiesen, dass der Zeitraum Δt 2 Sekunden beträgt. Dies reicht aus, um dynamische Druckveränderungen abklingen zu lassen und stört andererseits nicht den normalen Start eines Fahrzeuges, falls das erfindungsgemäße Verfahren als regelmäßige Routineuntersuchung im Fahrzeug durchgeführt wird.

Eine besonders geeignete Vorrichtung zur Durchführung des Verfahrens ist ein Diagnosegerät zum Anschluss an eine Luftfederungseinrichtung eines Fahrzeuges, welches eine Recheneinrichtung mit einer Programmsteuerung zur Durchführung des Verfahrens aufweist. Damit kann die Überprüfung der Funktionsfähigkeit des Umgebungsventils leicht und einfach bei einem Werkstattbesuch durchgeführt werden.

Eine ebenfalls besonders geeignete Vorrichtung zur Durchführung des Verfahrens ist ein Steuergerät für eine Luftfederungseinrichtung eines Fahrzeuges, welches eine Recheneinrichtung mit einer Programmsteuerung zur Durchführung des Verfahrens aufweist. Damit kann die Überprüfung der Funktionsfähigkeit des Umgebungsventils leicht und einfach als regelmäßige Routineuntersuchung im Fahrzeug durchgeführt werden. Besonders gut nutzbar ist ein solches Verfahren in einer Fahrzeugluftfederung mit einem solchen Steuergerät.

Anhand eines Ausführungsbeispieles soll die Erfindung näher erläutert werden. Es zeigen
- Fig. 1: ein schematisches Schaltbild einer Niveauregulierungsanlage
- Fig. 2: ein selbsterklärendes Flussdiagramm des erfindungsgemäßen Prüfungsverfahrens

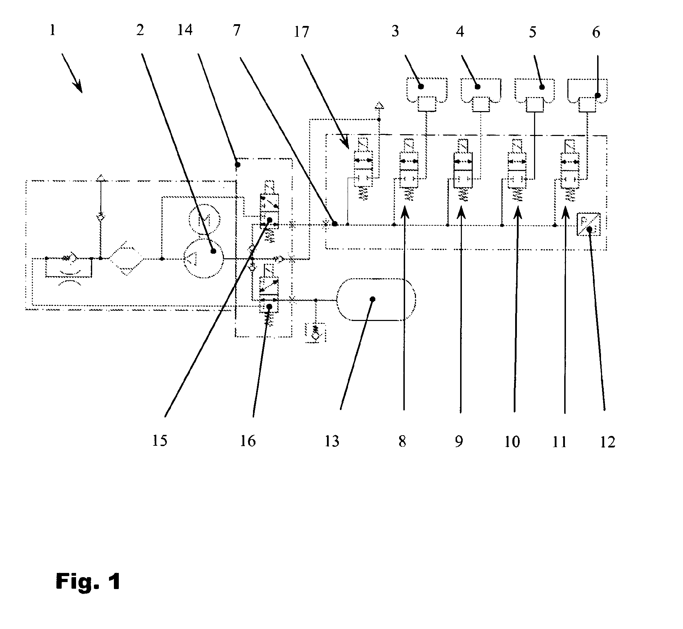

Die Fig. 1 zeigt ein schematisches Schaltbild einer Niveauregulierungsanlage 1 für ein Fahrzeug, wobei die Niveauregulierungsanlage einen Kompressor 2, Luftfedern 3,4,5 und 6 für jedes Rad der Vorder- und Hinterachse, eine Hauptleitung 7 zur Befüllung und Entlüftung aller Luftfedern, sowie je ein schaltbares Luftfederventil 8, 9 10 und 11 zum Anschluss jeder Luftfeder an die Hauptleitung aufweist.

Weiterhin beinhaltet die Niveauregulierungsanlage einen Drucksensor 12 in der Hauptleitung 7, einen Druckluftspeicher 13 als Druckluftvorratsbehälter sowie einen Magnetventilblock 14 mit einer Reihe von einzeln oder auch gemeinsam schaltbaren Magnetventilen 15 und 16 für die Verschaltung der einzelnen Einrichtungen der Niveauregulierungsanlage.

Der Druckluftspeicher 13, der Kompressor 2 und die Luftfedern 3,4,5 und 6 stehen über den Magnetventilblock 14 derart in Verbindung, dass Druckluft sowohl aus dem Druckluftspeicher 13 über den Kompressor 2 und die Hauptleitung 7 in die Luftfedern 3,4,5 und 6 als auch aus den Luftfedern über die Hauptleitung und den Kompressor (8) in den Druckluftspeicher überführbar ist. Ebenso ist eine Schaltstellung möglich, in der der Druckluftspeicher 13 durch den Kompressor 2 befüllbar ist.

In der Hauptleitung 7 der Niveauregulierungsanlage ist ein schaltbares Umgebungsventil 17 zur Entlüftung der Druckluft aus der Niveauregulierungsanlage in die Umgebung angeschlossen.

Das erfindungsgemäße Verfahren besteht nun darin, dass zur Erfassung des Druckwertes P₁ die Magnetventile (Umschaltventile) 15 und 16 zunächst geöffnet werden, damit in der Hauptleitung 7 der Systemdruck anliegt. Der Druckwert P₁, der sich nach dieser Zeit am Drucksensor 12 statisch einstellt, wird gemessen und in der Software eines hier nicht näher dargestellten Diagnosegerätes für die Niveauregulierungsanlage als Speicherwert hinterlegt. Danach werden für eine Zeitdauer t die Magnetventile (Umschaltventile) 15 und 16 geschlossen.

Der Druck P₁ kann auch nach dem Schließen der Magnetventile (Umschaltventile) 15 und 16 gemessen werden.

Ist der Druckwert P₁ kleiner als ein definierter Schwellenwert, so wird das erfindungsgemäße Prüfungsverfahren abgebrochen. Auf einem etwa am Diagnosegerät angeschlossenen Display erscheint dann ein entsprechender Hinweis, z.B. "Speicherdruck zu niedrig für Umgebungsventilprüfung".

Nach einer Befüllung des Druckspeichers 13 kann dann das erfindungsgemäße Prüfungsverfahren wiederholt werden.

Liegt der Druckwert P₁ nun nach Schließung Magnetventile (Umschaltventile) 15 und 16 oberhalb der o. g. Schwelle, so werden die Magnetventile 15 und 16 geschlossen gehalten und das Umgebungsventil 17 eine zeitlang geöffnet.

Anschließend wird das Umgebungsventil 17 wieder geschlossen und nach Ablauf der Zeit Δt wird der Druckwert P₁ in der Software des Diagnosegerätes für die Niveauregulierungsanlage als Speicherwert hinterlegt. Unter Berücksichtigung der Sensorauflösung muss sich bei einwandfreier Durchführung (Umgebungsventil hat mechanisch geöffnet) folgender Relation einstellen: P₁ < P₂. Auf dem Display des angeschlossenen Diagnosetesters kann dann eine entsprechende Meldung ausgegeben werden, z.B. "Umgebungsventilprüfung i.O.". Stellt sich diese Relation so nicht ein, so muss eine entspr. Meldung ausgegeben werden, z.B. "Umgebungsventil defekt", und entsprechende Fehleruntersuchungen müssen in der Werkstatt unternommen werden.

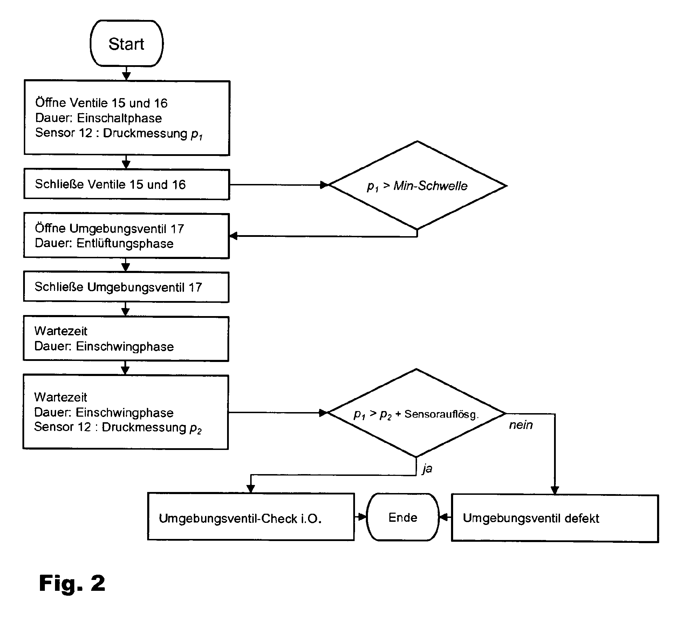

Fig. 2. zeigt das erfindungsgemäße Prüfungsverfahren noch einmal anhand eines selbsterklärenden Flussdiagramms. Der Abkürzung "Sensorauflösg." Steht dabei für "Sensorauflösung" und deutet an, dass die etwa durch Bauart oder Betriebsart des Sensors bedingten Messschwankungen oder Messungenauigkeiten in der Aufarbeitung der Messergebnisse berücksichtigt werden.

### Bezugszeichenliste

### (Teil der Beschreibung)

- 1.: Niveauregulierungsanlage für ein Kraftfahrzeug
- 2.: Kompressor
- 3.: Luftfeder 1 Vorderachse
- 4.: Luftfeder 2 Vorderachse
- 5.: Luftfeder 1 Hinterachse
- 6.: Luftfeder 2 Hinterachse
- 7.: Hauptleitung
- 8.: Luftfederventil 1 Vorderachse
- 9.: Luftfederventil 2 Vorderachse
- 10.: Luftfederventil 1 Hinterachse
- 11.: Luftfederventil 2 Hinterachse 12. Drucksensor
- 13.: Druckluftspeicher
- 14.: Magnetventilblock
- 15.: Magnetventil (Umschaltventil)
- 16.: Magnetventil (Umschaltventil)
- 17.: Umgebungsventil

## Patentansprüche

1. Verfahren zur Überprüfung eines Umgebungsventils einer geschlossenen Niveauregulierungsanlage für eine Fahrzeug, wobei die Niveauregulierungsanlage (1) folgende Einrichtungen aufweist:
- einen Kompressor (2),
- Luftfedern (3, 4, 5, 6) für jedes Rad mindestens einer Achse,
- eine Hauptleitung (7) zur Befüllung und Entlüftung aller Luftfedern,
- je ein schaltbares Luftfederventil (8, 9, 10, 11) zum Anschluss jeder Luftfeder an die Hauptleitung (7),
- einen Drucksensor (12) in der Hauptleitung,
- einen Druckluftspeicher (13) als Druckluftvorratsbehälter,
- einen Magnetventilblock (14) mit einer Reihe von einzeln oder auch gemeinsam schaltbaren Magnetventilen (15, 16) für die Verschaltung der einzelnen Einrichtungen der Niveauregulierungsanlage,
- wobei der Druckluftspeicher (13), der Kompressor (2) und die Luftfedern (3, 4, 5, 6) über den Magnetventilblock (14) derart in Verbindung stehen,
- dass Druckluft sowohl aus dem Druckluftspeicher (13) über den Kompressor (2) und die Hauptleitung (7) in die Luftfedern (3, 4, 5, 6),
- als auch aus den Luftfedern (3, 4, 5, 6) über die Hauptleitung (7) und den Kompressor (2) in den Druckluftspeicher (13) überführbar
- als auch der Druckluftspeicher (13) durch dem Kompressor (2) befüllbar ist,
- ein in der Hauptleitung (7) der Niveauregulierungsanlage angeschlossenes schaltbares Umgebungsventil (17) zur Entlüftung der Druckluft aus der Niveauregulierungsanlage in die Umgebung,
**dadurch gekennzeichnet,**
- **dass** zunächst bei geschlossenen Luftfederventilen (8, 9, 10, 11) die Magnetventile (15, 16) des Magnetventilblocks (14) so geschaltet werden, dass die Hauptleitung (7) mit dem Druck des Druckluftspeichers beaufschlagt wird,
- **dass** danach mit Hilfe des Drucksensors (12) ein Druck P₁ in der Hauptleitung (7) gemessen wird,
- **dass** danach die Magnetventile (15, 16) des Magnetventilblocks (14) geschlossen werden,
- **dass** anschließend das Umgebungsventil (17) mit einem Schaltbefehl zur Öffnung/Entlüftung geöffnet und danach durch einen weiteren Schaltbefehl wieder geschlossen wird,
- **dass** danach mit Hilfe des Drucksensors (12) ein Druck P₂ in der Hauptleitung (7) gemessen wird
- und schließlich die Druckwerte P₁ und P₂ miteinander verglichen werden.

2. Verfahren nach Anspruch 1, bei dem die Differenz der Druckwerte P₁ und P₂ vor dem Vergleich der Druckwerte mit Hilfe eines Schwellenwertes klassifiziert wird.

3. Verfahren nach Anspruch 1 oder 2, bei dem der Druckwert P₁ vor dem Öffnen des Umgebungsventils (17) mit Hilfe eines Schwellenwertes klassifiziert wird.

4. Verfahren einem der Ansprüche 1 bis 3, bei dem zwischen dem Schließen des Umgebungsventils (17) und der Messung des Drucks P₂ ein Zeitraum Δt liegt.

5. Verfahren nach Anspruch 4, **dadurch gekennzeichnet, dass** der Zeitraum Δt 2 Sekunden beträgt.

6. Diagnosegerät zum Anschluss an eine Luftfederungseinrichtung eines Fahrzeuges, welches eine Recheneinrichtung mit einer Programmsteuerung zur Durchführung des Verfahrens nach Anspruch 1 bis 5 aufweist.

7. Steuergerät für eine Luftfederungseinrichtung eines Fahrzeuges, welches eine Recheneinrichtung mit einer Programmsteuerung zur Durchführung des Verfahrens nach Anspruch 1 bis 5 aufweist.

8. Fahrzeugluftfederung mit einem Steuergerät nach Anspruch 7.

## Claims

1. Method for checking an environmental valve of a closed ride level control system for a vehicle, the ride level control system (1) having the following devices:
- a compressor (2),
- air springs (3, 4, 5, 6) for each wheel of at least one axle,
- a main line (7) for filling and ventilating all the air springs,
- in each case one switchable air-spring valve (8, 9, 10, 11) for connecting each air spring to the main line (7),
- a pressure sensor (12) in the main line,
- a compressed-air accumulator (13) as compressed-air supply container,
- a solenoid-valve block (14) with a row of solenoid valves (15, 16) which can be switched individually or else jointly for connecting the individual devices of the ride level control system,
- the compressed-air accumulator (13), the compressor (2) and the air springs (3, 4, 5, 6) being connected via the solenoid-valve block (14) in such a way
- that compressed air can both be transferred out of the compressed-air accumulator (13) via the compressor (2) and the main line (7) into the air springs (3, 4, 5, 6),
- and can also be transferred out of the air springs (3, 4, 5, 6) via the main line (7) and the compressor (2) into the compressed-air accumulator (13),
- and the compressed-air accumulator (13) can also be filled by the compressor (2),
- a switchable environmental valve (17) which is connected in the main line (7) of the ride level control system for ventilating the compressed air out of the ride level control system into the surroundings,
**characterized**
- **in that**, first of all in the case of closed air-spring valves (8, 9, 10, 11), the solenoid valves (15, 16) of the solenoid-valve block (14) are switched in such a way that the main line (7) is loaded with the pressure of the compressed-air accumulator,
- **in that** subsequently a pressure P₁ in the main line (7) is measured with the aid of the pressure sensor (12),
- **in that** subsequently the solenoid valves (15, 16) of the solenoid-valve block (14) are closed,
- **in that** subsequently the environmental valve (17) is opened by way of a switching command for opening/ventilating and afterwards is closed again by a further switching command,
- **in that** afterwards a pressure P₂ in the main line (7) is measured with the aid of the pressure sensor (12),
- and finally the pressure values P₁ and P₂ are compared with one another.

2. Method according to Claim 1, in which the difference of the pressure values P₁ and P₂ is classified with the aid of a threshold value before the comparison of the pressure values.

3. Method according to Claim 1 or 2, in which the pressure value P₁ is classified with the aid of a threshold value before the environmental valve (17) is opened.

4. Method according to one of Claims 1 to 3, in which a time period Δt lies between the closure of the environmental valve (17) and the measurement of the pressure P₂.

5. Method according to Claim 4, **characterized in that** the time period Δt is 2 seconds.

6. Diagnosis unit for connecting to an air-suspension device of a vehicle, which diagnosis unit has a computing device with a program controller for carrying out the method according to Claims 1 to 5.

7. Control unit for an air-suspension device of a vehicle, which control unit has a computing device with a program controller for carrying out the method according to Claims 1 to 5.

8. Vehicle air-suspension system having a control unit according to Claim 7.

## Revendications

1. Procédé de contrôle d'une soupape d'environnement d'une installation de régulation de niveau fermée d'un véhicule, dans lequel l'installation de régulation de niveau (1) présente les dispositifs suivantes :
- un compresseur (2),
- des ressorts pneumatiques (3, 4, 5, 6) pour chaque roue d'au moins un essieu,
- une conduite principale (7) pour remplir et purger tous les ressorts pneumatiques,
- une soupape de ressort pneumatique commutable respective (8, 9, 10, 11) pour raccorder chaque ressort pneumatique à la conduite principale (7),
- un capteur de pression (12) dans la conduite principale,
- un accumulateur d'air sous pression (13) en tant que réservoir d'air sous pression,
- un bloc d'électrovannes (14) comprenant une série d'électrovannes (15, 16) pouvant être commutées individuellement ou en commun pour le branchement des dispositifs individuels de l'installation de régulation de niveau,
- l'accumulateur d'air sous pression (13), le compresseur (2) et les ressorts pneumatiques (3, 4, 5, 6) étant en liaison par le biais du bloc d'électrovannes (14) de telle sorte
- que de l'air comprimé puisse être transféré de l'accumulateur d'air sous pression (13) par le biais du compresseur (2) et de la conduite principale (7) aux ressorts pneumatiques (3, 4, 5, 6),
- ainsi que des ressorts pneumatiques (3, 4, 5, 6) par le biais de la conduite principale (7) et du compresseur (2) à l'accumulateur d'air sous pression (13),
- et que l'accumulateur d'air sous pression (13) puisse être rempli par le compresseur (2),
- une soupape d'environnement (17) commutable raccordée dans la conduite principale (7) de l'installation de régulation de niveau, pour purger l'air sous pression hors de l'installation de régulation de niveau dans l'environnement,
**caractérisé en ce que**
- tout d'abord, lorsque les soupapes de ressort pneumatique (8, 9, 10, 11) sont fermées, les électrovannes (15, 16) du bloc d'électrovannes (14) sont commutées de telle sorte que la conduite principale (7) soit sollicitée avec la pression de l'accumulateur d'air sous pression,
- **en ce qu'**ensuite, à l'aide du capteur de pression (12), une pression P₁ dans la conduite principale (7) est mesurée,
- **en ce qu'**ensuite les électrovannes (15, 16) du bloc d'électrovannes (14) sont fermées,
- **en ce qu'**ensuite, la soupape d'environnement (17) est ouverte par un ordre de commutation d'ouverture/purge, puis, par un ordre de commutation supplémentaire, est à nouveau fermée,
- **en ce qu'**ensuite, à l'aide du capteur de pression (12), une pression P₂ dans la conduite principale (7) est mesurée,
- et finalement **en ce que** les valeurs de pression P₁ et P₂ sont comparées l'une à l'autre.

2. Procédé selon la revendication 1, dans lequel la différence entre les valeurs de pression P₁ et P₂ est classifiée à l'aide d'une valeur de seuil avant la comparaison des valeurs de pression.

3. Procédé selon la revendication 1 ou 2, dans lequel la valeur de pression P₁ est classifiée à l'aide d'une valeur de seuil avant l'ouverture de la soupape d'environnement (17).

4. Procédé selon l'une quelconque des revendications 1 à 3, dans lequel, entre la fermeture de la soupape d'environnement (17) et la mesure de la pression P₂, s'écoule un intervalle de temps Δt.

5. Procédé selon la revendication 4, **caractérisé en ce que** l'intervalle de temps Δt vaut 2 secondes.

6. Appareil de diagnostic pour le raccordement à un dispositif de suspension pneumatique d'un véhicule, qui présente un dispositif de calcul avec une commande programmable pour mettre en oeuvre le procédé selon les revendications 1 à 5.

7. Appareil de commande pour un dispositif de suspension pneumatique d'un véhicule, qui présente un dispositif de calcul avec une commande programmable pour mettre en oeuvre le procédé selon les revendications 1 à 5.

8. Suspension pneumatique d'un véhicule ayant un appareil de commande selon la revendication 7.
